# EUROPEAN PATENT APPLICATION

(11) **EP 2 866 405 A1**
(43) Date of publication of application: **29.04.2015**
(21) Application number: 13816492.6
(22) Date of filing: 12.07.2013
(51) Int. Cl.: H04L 29/06

(54) **ACCESS DEVICE AND SYSTEM, AND DATA SENDING METHOD**

(30) Priority: 12.07.2012 CN 201210241342
(71) Applicant: Huawei Technologies Co., Ltd., Longgang District Shenzhen, Guangdong 518129 (CN)
(72) Inventor: FENG, Liexun, Shenzhen Guangdong 518129 (CN); WANG, Daowei, Shenzhen Guangdong 518129 (CN)
(74) Representative: Haley, Stephen
(86) International application number: PCT/CN2013/079263
(87) International publication number: WO 2014/008869

(57) **Abstract**

Embodiments of the present invention provide an access device and system and a method for sending data, and relate to the field of communications technologies, where the device includes: an IP clock server, configured to acquire a time synchronization signal and generate a time synchronization packet based on the time synchronization signal; a first interface, configured to connect to an access point transmission device, so as to receive a service packet; a second interface, configured to connect to a small-cell base station; and a transmission module, configured to send the service packet received from the first interface and the time synchronization packet generated by the IP clock server to the small-cell base station through the second interface. According to the embodiments of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station.

## Description

This application claims priority to Chinese Patent Application No. 201210241342.3, filed with the Chinese Patent Office on July 12, 2012 and entitled "ACCESS DEVICE AND SYSTEM, AND METHOD FOR SENDING DATA", which is incorporated herein by reference in its entirety.

### TECHNICAL FIELD

The present invention relates to the field of communications technologies, and in particular, to an access device and system, and a method for sending data.

### BACKGROUND

As mobile communications technologies develop, small-cell base stations find an increasing application in indoor and hotspot coverage. During networking of small-cell base stations, each small-cell base station generally needs to connect to an access point transmission device, a synchronization device, and a power supply device through different cables. Due to special application scenarios of the small-cell base stations, the cabling is difficult, the engineering load is heavy, and the cabling costs are high for networking of the small-cell base stations.

### SUMMARY

In order to solve problems of difficulty in cabling, a heavy engineering load, and high cabling costs during networking of small-cell base stations in the prior art, embodiments of the present invention provide an access device and system, and a method for sending data. The technical solutions are as follows:

In one aspect, an embodiment of the present invention provides an access device, where the device includes:
an IP clock server, configured to acquire a time synchronization signal and generate a time synchronization packet based on the time synchronization signal;
a first interface, configured to connect to an access point transmission device, so as to receive a service packet transmitted through the access point transmission device;
a second interface, configured to connect to a small-cell base station; and
a transmission module, configured to send the service packet received from the first interface and the time synchronization packet generated by the IP clock server to the small-cell base station through the second interface.

Specifically, the first interface is an Ethernet interface or a gigabit-capable passive optical network interface.

Specifically, the second interface is an RJ45 interface.

Optionally, the device further includes a third interface, configured to connect to a lower-level access device, so as to send the service packet received from the first interface and the time synchronization packet generated by the IP clock server to the lower-level access device.

Optionally, the device further includes:
a power-over-Ethernet module, configured to supply power to the small-cell base station through the transmission module.

Optionally, the device further includes:
a satellite signal receiver, configured to receive the time synchronization signal.

Further, the satellite signal receiver is integrated with the IP clock server as a whole.

In another aspect, an embodiment of the present invention further provides an access device, where the device includes:
a first interface, configured to connect to an upper-level access device, so as to receive a service packet and a time synchronization packet that are transmitted by the upper-level access device;
an IP clock server, configured to generate a new time synchronization packet according to the time synchronization packet received from the upper-level access device;
a second interface, configured to connect to a small-cell base station; and
a transmission module, configured to send the time synchronization packet received from the first interface to the IP clock server, and send the service packet received from the first interface and the new time synchronization packet generated by the IP clock server to the small-cell base station through the second interface.

Optionally, the device further includes:
a power-over-Ethernet module, configured to supply power to the small-cell base station through the second interface.

Optionally, the device further includes a third interface, configured to connect to a lower-level access device, so as to send the service packet received from the first interface and the new time synchronization packet generated by the IP clock server to the lower-level access device.

In still another aspect, an embodiment of the present invention further provides an access system, where the system includes: an transmission device, at least one small-cell base station, and the foregoing access device, where the small-cell base station is connected to the access point transmission device through the access device.

In yet another aspect, an embodiment of the present invention further provides a method for sending data, where the method includes:
acquiring, by an IP clock server in an access device, a time synchronization signal, and generating a time synchronization packet based on the time synchronization signal, where the time synchronization packet is generated by the IP clock server and the IP clock server is arranged in the access device;
receiving, by the access device, a service packet transmitted through an access point transmission device, where the access device includes a first interface, the first interface is connected to the access point transmission device, and the service packet is received through the first interface; and
sending, by the access device, the service packet received from the first interface and the time synchronization packet generated by the IP clock server to a small-cell base station through a second interface.

Optionally, the method further includes:
sending, by the access device, the service packet received from the first interface and the time synchronization packet generated by the IP clock server to a lower-level access device through a third interface.

Optionally, the method further includes:
supplying, by a power-over-Ethernet module in the access device, power to the small-cell base station through the second interface.

In yet another aspect, an embodiment of the present invention further provides a method for sending data, where the method includes:
receiving, by an access device through a first interface, a service packet and a time synchronization packet that are transmitted by an upper-level access device;
generating, by an IP clock server in the access device, a new time synchronization packet according to the time synchronization packet received from the upper-level access device, where the IP clock server is arranged in the access device; and
sending, by the access device, the time synchronization packet received from the first interface to the IP clock server, and sending the service packet received from the first interface and the new time synchronization packet generated by the IP clock server to a small-cell base station through a second interface.

Optionally, the method further includes:
sending, by the access device, the service packet received from the first interface and the new time synchronization packet generated by the IP clock server to a lower-level access device through a third interface.

Optionally, the method further includes:
supplying, by a power-over-Ethernet module in the access device, power to the small-cell base station through the second interface.

A beneficial effect of the technical solutions provided by the embodiments of the present invention is as follows: According to the embodiments of the present invention, a time synchronization packet is generated by an IP clock server; a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings according to these accompanying drawings without creative efforts.
FIG. 1 is a structural block diagram of an access device according to Embodiment 1 of the present invention;
FIG. 2 is a structural block diagram of an access device according to Embodiment 2 of the present invention;
FIG. 3 is a structural block diagram of an access device according to Embodiment 3 of the present invention;
FIG. 4 is a structural block diagram of an access device according to Embodiment 4 of the present invention;
FIG. 5 is a structural block diagram of an access system according to Embodiment 5 of the present invention;
FIG. 6 is a structural block diagram of an access system according to Embodiment 6 of the present invention;
FIG. 7 is a flowchart of a method for sending data according to Embodiment 7 of the present invention; and
FIG. 8 is a flowchart of a method for sending data according to Embodiment 8 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

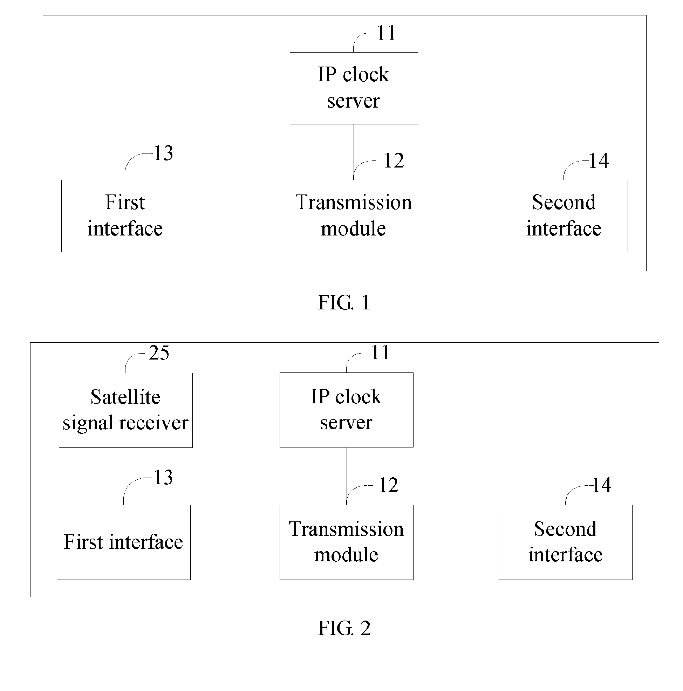

An embodiment of the present invention provides an access device. As shown in FIG. 1, the device includes an IP clock server 11, a transmission module 12, a first interface 13, and a second interface 14.

The IP clock server 11 is configured to acquire a time synchronization signal and generate a time synchronization packet based on the time synchronization signal; the first interface 13 is configured to connect to an access point transmission device, so as to receive a service packet transmitted through the access point transmission device; the second interface 14 is configured to connect to a small-cell base station; and the transmission module 12 is configured to send the service packet received from the first interface 13 and the time synchronization packet generated by the IP clock server 11 to the small-cell base station through the second interface 14. The transmission module 12 is electrically connected to the first interface 13, the second interface 14, and the IP clock server 11.

Specifically, a small-cell base station includes, but is not limited to, a Micro base station (Micro Base Station, micro base station), a Pico base station (Pico Base station, pico base station), and a Femto base station (Femto Base Station, femto base station); and a standard includes, but is not limited to, GSM (Global System of Mobile communication, global system for mobile communications), UMTS (Universal Mobile Telecommunications System, universal mobile telecommunications system), LTE (Long Term Evolution, long term evolution), CDMA (Code Division Multiple Access, Code Division Multiple Access), and WIMAX (Worldwide Interoperability for Microwave Access, worldwide interoperability for microwave access). The access point transmission device is configured to implement data transmission between a device in a core network and a device in an access network.

Specifically, the time synchronization signal may be a positioning signal from a satellite positioning system. Specifically, the satellite positioning system may be a GPS (Global Positioning System, global positioning system), BeiDou Satellite Positioning System, or another satellite positioning system.

Specifically, the IP clock server 11 provides a time synchronization function according to the IEEE 1588V2 time synchronization protocol. In this embodiment, the IP clock server 11 works in server mode. The structure and principle of the IP clock server 11 are known to a person skilled in the art and are not described in detail herein.

The first interface 13 includes, but is not limited to, an Ethernet interface or a GPON (Gigabit-capable passive optical network, gigabit-capable passive optical network) interface, where a form of the interface may be an electrical interface or an optical interface.

Optionally, the second interface 14 is an RJ45 interface. RJ45 refers to a modular 8-position (8-pin) jack or plug defined according to an international connector standard. The RJ45 interface is usually used for data transmission, and a most common application is a network adapter interface.

Specifically, the transmission module 12 sends the service packet that is from the access point transmission device and received from the first interface 13 to a small-cell base station through the second interface 14 and meanwhile, sends the time synchronization packet provided by the IP clock server 11 to the small-cell base station through the second interface 14, thereby implementing both a synchronization function and a transmission function.

It should be noted that in a specific implementation, the device may be called a Smart Unit.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs.

### Embodiment 2

An embodiment of the present invention provides an access device. As shown in FIG. 2, different from the device in Embodiment 1, the present device further includes a satellite signal receiver 25, configured to receive a time synchronization signal, where the IP clock server 11 acquires the time synchronization signal through the satellite signal receiver 25.

Further, the satellite signal receiver 25 may be integrated with the IP clock server 11 as a whole, thereby further reducing a size of the device and installation difficulty.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device , which can be implemented easily at low costs. In addition, the time synchronization signal is acquired through a satellite signal receiver, thereby achieving high accuracy and low costs.

### Embodiment 3

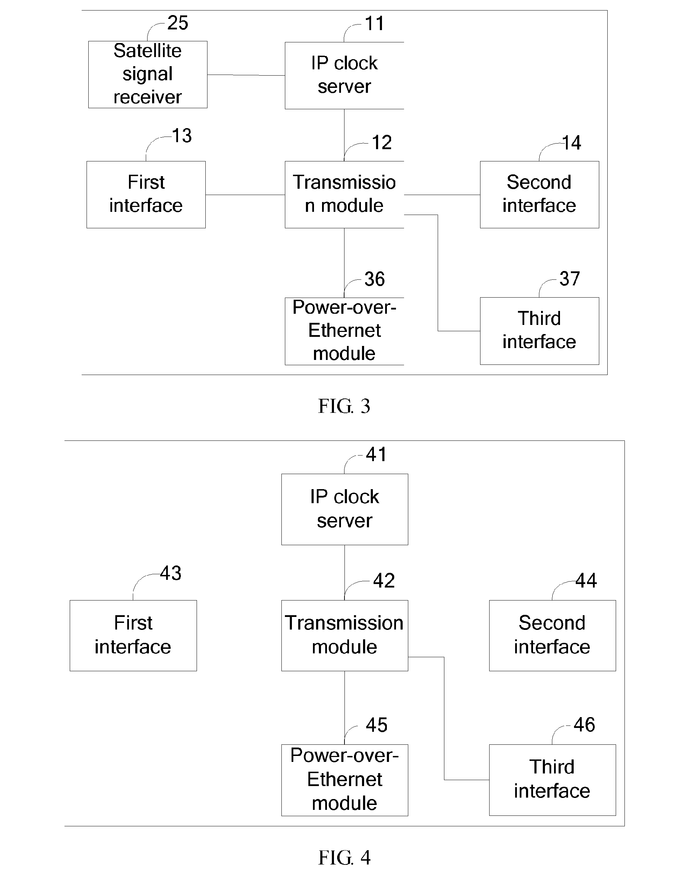

An embodiment of the present invention provides an access device. As shown in FIG. 3, different from the device in Embodiment 2, the present device further includes:
a power-over-Ethernet module 36, configured to supply power to a small-cell base station through a transmission module 12. The power-over-Ethernet module 36 is electrically connected to the transmission module 12.

Specifically, in a general situation, four terminals of an RJ45 interface are data transmission terminals and the other four terminals are idle; and the power-over-Ethernet module may transmit power through the four idle terminals (or a part of the four idle terminals) of the RJ45 interface, thereby achieving both data transmission and power supply functions through the RJ45 interface.

Optionally, the device further includes a third interface 37, where the third interface 37 is configured to connect to a lower-level access device, so as to send a service packet received from a first interface 13 and a time synchronization packet generated by an IP clock server 11 to the lower-level access device. In a situation where the number of small-cell base stations is relatively large and the number of second interfaces of the access device is insufficient, the access device may be connected to another access device through the third interface, so that the number of second interfaces is increased and more small-cell base stations are connected.

Specifically, the third interface 37 may be an optical interface or an electrical interface, including, but not limited to, an Ethernet interface, a GPON interface, or an RJ45 interface.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs. In addition, according to this embodiment, a power-over-Ethernet module is used for power supply; therefore, a data transmission function, a time synchronization function, and a power supply function can be implemented concurrently through a cable connected to a second interface, thereby implementing a three-in-one cable and further saving installation costs.

### Embodiment 4

An embodiment of the present invention provides an access device. As shown in FIG. 4, the device includes an IP clock server 41, a transmission module 42, a first interface 43, and a second interface 44. The first interface 43 is configured to connect to an upper-level access device, so as to receive a service packet and a time synchronization packet that are transmitted by the upper-level access device; the IP clock server 41 is configured to generate a new time synchronization packet according to the time synchronization packet received from the upper-level access device; the second interface 44 is configured to connect to a small-cell base station; and the transmission module 42 is configured to send the time synchronization packet received from the first interface 43 to the IP clock server 41 and send the service packet received from the first interface 43 and the new time synchronization packet generated by the IP clock server 41 to the small-cell base station through the second interface 44. The transmission module 42 is electrically connected to the first interface 43, the second interface 44, and the IP clock server 41.

In other words, the service packet and the time synchronization packet are transmitted by the upper-level access device to a lower-level access device, and the device in this embodiment is a lower-level access device of an access device connected to the first interface of the device in this embodiment. The IP clock server 41 of the lower-level access device works in BC (Boundary Clock, boundary clock) mode, synchronizes time with the upper-level access device (namely, the access device connected to the first interface) through a secondary port, and synchronizes time with a small-cell base station through multiple primary ports.

Specifically, the lower-level transmission module 42 receives the time synchronization packet from the upper-level access device through a secondary port of the second interface 44, and sends the time synchronization packet to the IP clock server 41, and the time synchronization packet after being processed by the IP clock server 41 is sent to the small-cell base station through a primary port of the second interface 44; and meanwhile, the transmission module 42 sends the service packet received from the first transmission interface 41 to the small-cell base station through the second interface. In a specific implementation, the transmission module 42 may parse a header of a packet to distinguish whether the packet is a service packet or a time synchronization packet.

Optionally, the device further includes a power-over-Ethernet module 45, configured to supply power to the small-cell base station through the second interface 44.

Optionally, the device further includes a third interface 46, where the third interface 46 is configured to connect to a lower-level access device, so as to send the service packet received from the first interface 43 and the time synchronization packet generated by the IP clock server 41 to the lower-level access device.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs. In addition, according to this embodiment, a power-over-Ethernet module is used for power supply; therefore, a data transmission function, a time synchronization function, and a power supply function can be implemented concurrently through a cable connected to a second interface, thereby implementing a three-in-one cable and further saving installation costs. Furthermore, through the access device in this embodiment, the number of second interfaces that are used to connect to small-cell base stations can be increased, so that more small-cell base stations can be accessed.

### Embodiment 5

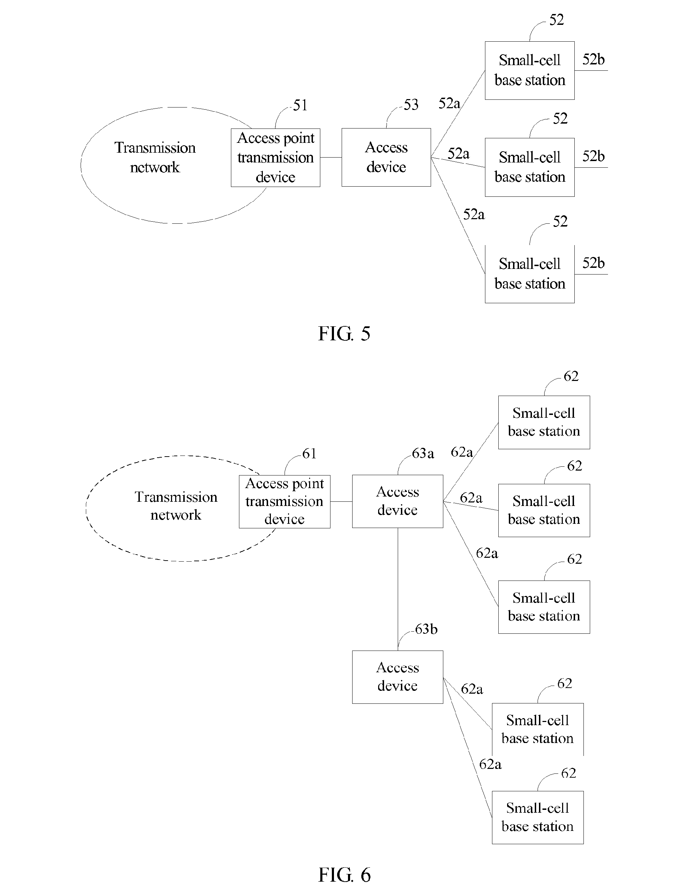

An embodiment of the present invention provides an access system. As shown in FIG. 5, the system includes an access point transmission device 51, small-cell base stations 52, and an access device 53, where a small-cell base station 52 is connected to the access point transmission device 51 through the access device 53, and the access device 53 may be the access device provided in Embodiment 1 or 2.

In a specific implementation, a small-cell base station 52 is connected to a second interface of the corresponding access device 53 through a cable 52a, and the access device 53 simultaneously provides data transmission and time synchronization functions to the small-cell base station 52 through the cable 52a. In addition, the small-cell base station 52 is connected to an external power supply device through a cable 52b.

It should be noted that the number of small-cell base stations in the figure is merely exemplary and is not intended to limit the present invention.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs.

### Embodiment 6

An embodiment of the present invention provides an access system. As shown in FIG. 6, the system includes an access point transmission device 61, several access devices 63a and 63b, and several small-cell base stations 62, where the access device 63a may be the device provided in Embodiment 3, the access device 63b may be the device provided in Embodiment 4, and the small-cell base stations 62 are connected to the access point transmission device 61 through the corresponding access devices 63a and 63b.

Specifically, there may be multiple access devices (two in the figure), the access device 63b is a lower-level access device for the access device 63a, and the access device 63a is an upper-level access device for the access device 63b. A third interface of the upper-level access device 63a is connected to a first interface of the lower-level access device 63b.

In a specific implementation, a small-cell base station 62 is connected to a second interface of the corresponding access device 63a or 63b through a cable 62a, and the access device 63a or 63b simultaneously provides data transmission, time synchronization, and power supply functions to the small-cell base station 62 through the cable 62a.

It should be noted that the number of small-cell base stations and the number of access devices in the figure are merely exemplary and not intended to limit the present invention.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs. In addition, according to this embodiment, a power-over-Ethernet module is used for power supply; therefore, a data transmission function, a time synchronization function, and a power supply function can be implemented concurrently through a cable connected to a second interface, thereby implementing a three-in-one cable and further saving installation costs. Furthermore, through the access device in this embodiment, the number of second interfaces that are used to connect to small-cell base stations can be increased, so that more small-cell base stations can be accessed.

### Embodiment 7

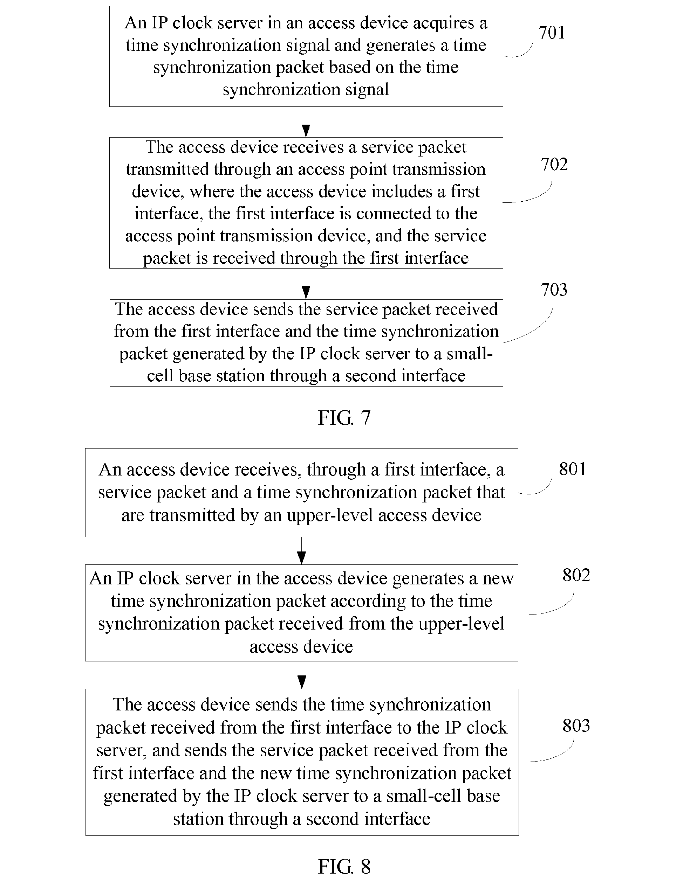

An embodiment of the present invention provides a method for sending data. As shown in FIG. 7, the method includes:

Step 701: An IP clock server in an access device acquires a time synchronization signal and generates a time synchronization packet based on the time synchronization signal.

Step 702: The access device receives a service packet transmitted through an transmission device, where the access device includes a first interface, the first interface is connected to the access point transmission device, and the service packet is received through the first interface.

Step 703: The access device sends the service packet received from the first interface and the time synchronization packet generated by the IP clock server to a small-cell base station through a second interface.

Optionally, the method may further include:

The access device sends the service packet received from the first interface and the time synchronization packet generated by the IP clock server to a lower-level access device through a third interface. This step can be performed simultaneously with step 703.

Optionally, the method may further include:

A power-over-Ethernet module in the access device supplies power to the small-cell base station through the second interface. This step works throughout the whole process of this embodiment, that is, it is performed simultaneously with steps 701 to 703.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs. In addition, according to this embodiment, a power-over-Ethernet module is used for power supply; therefore, a data transmission function, a time synchronization function, and a power supply function can be implemented concurrently through a cable connected to a second interface, thereby implementing a three-in-one cable and further saving installation costs.

### Embodiment 8

An embodiment of the present invention provides a method for sending data. As shown in FIG. 8, the method includes:

Step 801: An access device receives, through a first interface, a service packet and a time synchronization packet that are transmitted by an upper-level access device.

Step 802: An IP clock server in the access device generates a new time synchronization packet according to the time synchronization packet received from the upper-level access device.

Step 803: The access device sends the time synchronization packet received from the first interface to the IP clock server, and sends the service packet received from the first interface and the new time synchronization packet generated by the IP clock server to a small-cell base station through a second interface.

Optionally, the method may further include:

The access device sends the service packet received from the first interface and the new time synchronization packet generated by the IP clock server to a lower-level access device through a third interface. This step can be performed simultaneously with step 803.

Optionally, the method may further include:

A power-over-Ethernet module in the access device supplies power to the small-cell base station through the second interface. This step works throughout the whole process of this embodiment, that is, it is performed simultaneously with steps 801 to 803.

According to the embodiment of the present invention, a time synchronization packet is generated by an IP clock server, and a service packet transmitted by an access point transmission device and the time synchronization packet generated by the IP clock server are sent to a small-cell base station through a same interface, thereby implementing both a synchronization function and a transmission function and effectively reducing the number of cables and difficulty in cabling for a small-cell base station. Furthermore, because the IP clock server is integrated in an access device and the access device is connected between the access point transmission device and the small-cell base station, it is unnecessary to reconfigure the existing access point transmission device, which can be implemented easily at low costs. In addition, according to this embodiment, a power-over-Ethernet module is used for power supply; therefore, a data transmission function, a time synchronization function, and a power supply function can be implemented concurrently through a cable connected to a second interface, thereby implementing a three-in-one cable and further saving installation costs. Furthermore, through the access device in this embodiment, the number of second interfaces that are used to connect to small-cell base stations can be increased, so that more small-cell base stations can be accessed.

It should be noted that, when a small-cell base station accesses the access device provided in the foregoing embodiments, the division of the foregoing functional modules is merely used as an example for description; in a practical application, the functions may be allocated to different modules for implementation according to needs, that is, an internal structure of the device is divided into different functional modules to implement all or a part of the functions described above. In addition, the access device and system provided in the foregoing embodiments and the embodiments of the method for sending data belong to the same idea. For a detailed implementation process of the access device and system, reference can be made to the method embodiments, and no further details are provided herein.

Sequence numbers of the foregoing embodiments of the present invention are merely used for description, and do not represent the preference of the embodiments.

A person of ordinary skill in the art may understand that all or a part of the steps of the foregoing embodiments may be implemented by hardware, or may be implemented by a program instructing relevant hardware. The program may be stored in a computer readable storage medium. The storage medium may be a read-only memory, a magnetic disk, or an optical disc.

The foregoing descriptions are merely exemplary embodiments of the present invention, but are not intended to limit the present invention. Any modification, equivalent replacement, or improvement made within the spirit and principle of the present invention shall fall within the protection scope of the present invention.

## Claims

1. An access device, comprising:
an IP clock server, configured to acquire a time synchronization signal and generate a time synchronization packet based on the time synchronization signal;
a first interface, configured to connect to an access point transmission device, so as to receive a service packet transmitted through the access point transmission device;
a second interface, configured to connect to a small-cell base station; and
a transmission module, configured to send the service packet received from the first interface and the time synchronization packet generated by the IP clock server to the small-cell base station through the second interface.

2. The device according to claim 1, wherein the first interface is an Ethernet interface or a gigabit-capable passive optical network interface.

3. The device according to claim 1, wherein the second interface is an RJ45 interface.

4. The device according to claim 1, further comprising a third interface, configured to connect to a lower-level access device, so as to send the service packet received from the first interface and the time synchronization packet generated by the IP clock server to the lower-level access device.

5. The device according to claim 1, further comprising:
a power-over-Ethernet module, configured to supply power to the small-cell base station through the transmission module.

6. The device according to claim 1, further comprising:
a satellite signal receiver, configured to receive the time synchronization signal.

7. The device according to claim 6, wherein the satellite signal receiver and the IP clock server are integrated as a whole.

8. An access device, comprising:
a first interface, configured to connect to an upper-level access device, so as to receive a service packet and a time synchronization packet that are transmitted by the upper-level access device;
an IP clock server, configured to generate a new time synchronization packet according to the time synchronization packet received from the upper-level access device;
a second interface, configured to connect to a small-cell base station; and
a transmission module, configured to send the time synchronization packet received from the first interface to the IP clock server, and send the service packet received from the first interface and the new time synchronization packet generated by the IP clock server to the small-cell base station through the second interface.

9. The device according to claim 8, further comprising:
a power-over-Ethernet module, configured to supply power to the small-cell base station through the second interface.

10. The device according to claim 8, further comprising a third interface, configured to connect to a lower-level access device, so as to send the service packet received from the first interface and the new time synchronization packet generated by the IP clock server to the lower-level access device.

11. An access system, comprising an access point transmission device and at least one small-cell base station, and further comprising the access device according to any one of claims 1 to 10, wherein the small-cell base station is connected to the access point transmission device through the access device.

12. A method for sending data, comprising:
acquiring, by an IP clock server in an access device, a time synchronization signal, and generating a time synchronization packet based on the time synchronization signal;
receiving, by the access device, a service packet transmitted through an access point transmission device, wherein the access device comprises a first interface, the first interface is connected to the access point transmission device, and the service packet is received through the first interface; and
sending, by the access device, the service packet received from the first interface and the time synchronization packet generated by the IP clock server to a small-cell base station through a second interface.

13. The method according to claim 12, further comprising:
sending, by the access device, the service packet received from the first interface and the time synchronization packet generated by the IP clock server to a lower-level access device through a third interface.

14. The method according to claim 12 or 13, further comprising:
supplying, by a power-over-Ethernet module in the access device, power to the small-cell base station through the second interface.

15. A method for sending data, comprising:
receiving, by an access device through a first interface, a service packet and a time synchronization packet that are transmitted by an upper-level access device;
generating, by an IP clock server in the access device, a new time synchronization packet according to the time synchronization packet received from the upper-level access device; and
sending, by the access device, the time synchronization packet received from the first interface to the IP clock server, and sending the service packet received from the first interface and the new time synchronization packet generated by the IP clock server to a small-cell base station through a second interface.

16. The method according to claim 15, further comprising:
sending, through a third interface, the service packet received from the first interface and the new time synchronization packet generated by the IP clock server to a lower-level access device.

17. The method according to claim 15 or 16, further comprising:
supplying, by a power-over-Ethernet module in the access device, power to the small-cell base station through the second interface.
